# EUROPEAN PATENT APPLICATION

(11) **EP 2 952 754 A1**
(43) Date of publication of application: **09.12.2015**
(21) Application number: 15168345.5
(22) Date of filing: 20.05.2015
(51) Int. Cl.: F16B 5/02, F16B 37/12

(54) **PLASTIC NUT, FASTENING SYSTEM AND FASTENING METHOD**

(30) Priority: 05.06.2014 DE 102014107942
(71) Applicant: Newfrey LLC, Newark, Delaware 19711 (US)
(72) Inventor: Lautner, Siegfried, 35394 Giessen (DE); Rosemann, Frank, 35394 Giessen (DE)
(74) Representative: Witte, Weller & Partner Patentanwälte mbB

(57) **Abstract**

Plastic nut (10), in particular for fastening an object (60) with respect to a stud (44) protruding from a workpiece (42), comprising an internal part (12) which has an internal-part internal-engagement section (20), which is matched to a stud thread (54) of a stud (44), and which has an internal-part external-engagement section (22), and an external part (14) which has a radially oriented support surface (30) for bearing against an object (60) to be fastened, and which has an external-part internal-engagement section (24) which is matched to the internal-part external-engagement section (22).

The internal part (12) and the external part (14) are connected to each other here via a connection (16) which is released in the event of a relative movement of internal part (12) and external part (14). (Fig. 1)

## Description

The present invention relates to a plastic nut, in particular for fastening an object with respect to a stud protruding from a workpiece, comprising an internal part which has an internal-part internal-engagement section, which is matched to a stud thread of a stud, and which has an internal-part external-engagement section, and with an external part which has a radially oriented support surface for bearing against an object to be fastened, and which has an external-part internal-engagement section which is matched to the internal-part external-engagement section.

Furthermore, the present invention relates to a fastening system comprising a stud which has a flange section and a stem section, which extends from the flange section and has a stud thread, wherein a side of the flange section that faces away from the stem section is designed as a joining side for joining the stud onto a workpiece, and wherein the flange section has an upper side facing the stem section, and comprising a plastic nut of the type referred to above.

Finally, the present invention relates to a method for fastening an object, which has an opening, with respect to a stud, which is joined to a workpiece, of a fastening system.

In the field of fastening technology, in particular in the field of fastening technology in motor-vehicle body manufacturing, it is known to fasten objects to workpieces via a fastening system of the type referred to above. In this connection, a stud is joined onto a workpiece, such as a sheet-metal section of a vehicle body, in particular by what is referred to as stud welding. However, the stud may also be adhesively bonded to the workpiece or joined thereto in another manner.

The fastening system furthermore comprises a plastic nut.

In order to fasten an object, such as, for example, a trim panel or the like, to the workpiece, the object is placed with the opening thereof onto the stud, which protrudes in relation to the workpiece, in such a manner that the stud protrudes opposite the opening. The plastic nut can then be screwed onto the stud until the support surface of said plastic nut enters into contact with the object.

The following boundary conditions can be noted in the case of this fastening system which has basically been known for a long time. First of all, the axial thickness of the object may vary from fastening site to fastening site (i.e. from stud to stud). The studs themselves may also vary, for example in respect of the type of flange section thereof, which, depending on the variant, protrudes to different heights in relation to the surface of the workpiece.

Finally, it should be ensured that the plastic nut is fastened with a torque which lies within a target torque window. If too low a torque is applied, the object may not be securely or rigidly fastened with respect to the workpiece, but instead has a degree of play, which may result in noise being produced, in particular if the fastening system is used in a motor vehicle.

If, on the other hand, the torque applied to the plastic nut is too high, it may happen that the plastic nut is supported on a relatively hard object and, because of the high torque, the joining connection between stud and workpiece loosens. The stud here is torn out or "unbuttoned" from the workpiece. In particular in the case of thin workpieces, such as sheets, this may necessitate a very costly remachining operation, since a replacement stud has to be joined onto the same point. The tearing of the joining connection between stud and workpiece may result in a through-hole arising in the workpiece, and this has to be closed again (for example, for corrosion reasons or the like).

In order to screw the plastic nut onto the stud, a torque wrench can be used in order to carry out the screwing-on operation manually. Alternatively, it is possible to use what are referred to as automatic screwing machines. In the case of torque wrenches, it is possible, for example, to wrongly set the torque wrench, and therefore an excessive torque is inadvertently applied. In the case of automatic screwing machines, transition states may occur which may result in torque peaks which lie outside the above-described torque window.

In both cases, it is therefore not possible reliably to rule out destruction of the joining connection between stud and workpiece.

The abovementioned problem can increase further, in particular when automatic screwing machines are used, whenever objects of different axial thickness are to be fastened with the same plastic nut, and/or studs having different flange-section heights are used. Automatic screwing machines are frequently provided with programming which only requires a certain number of screw revolutions before a torque limitation occurs. In the case of varying axial thicknesses of objects and the like, this may result in the torque limitation not yet being effective when the plastic nut rests on the surface of the object, and therefore an excessive torque is applied.

Against this background, it is an object of the invention to specify an improved plastic nut, an improved fastening system and an improved fastening method, wherein, preferably, the process reliability is increased and/or simple adaptation to different axial thicknesses of objects and/or flange heights can be achieved. The problem of improving the logistics for carrying out the fastening method is preferably also solved.

The above object is achieved by a plastic nut with the features of Claim 1, wherein, starting from the plastic nut mentioned at the beginning, it is provided that the internal part and the external part are connected to each other via a connection which is released in the event of a relative movement of internal part and external part.

The above object is furthermore achieved by a fastening system of the above-described type, wherein the plastic nut is a plastic nut according to the invention.

Finally, the above object is achieved by a method for fastening an object, which has an opening, with respect to a stud, which is joined onto a workpiece, of a fastening system of the type according to the invention, with the following steps: arranging the object on the workpiece in such a manner that the stud protrudes through the opening, placing the plastic nut onto the stud and screwing the internal part onto the stud until the support surface of the external part touches an outer side of the object, and continuing the screwing of the plastic nut onto the stud, wherein the external part is held in a rotationally fixed manner with respect to the object by means of friction and/or an interlocking connection, and therefore the connection between internal part and external part is released.

The plastic nut according to the invention basically consists of two parts, namely the internal part and the external part. However, said two parts are connected to each other via a connection, and therefore the plastic nut can be handled as a single part, which makes the logistics for carrying out the fastening method significantly easier. In this case, the connection is formed in particular by a connecting web or a small number of connecting webs which preferably extend in the radial direction between internal part and external part. The thickness of said webs is dimensioned in such a manner that said webs break in the event of a relative movement between external part and internal part. It goes without saying that the material of internal part and external part (and of the connecting webs) has to be appropriately selected for this purpose, i.e., in particular, a relatively hard plastics material should be used. The connection between internal part and external part is therefore in particular a connection which can be released only by destruction, i.e. breaks in the event of the relative movement.

In order to fasten the plastic nut to the stud, with the object having been placed onto the workpiece, the internal-part internal-engagement section engages with the stud thread of the stud in order thereby to ensure a high retaining force in the axial direction. As soon as the external part rests with the support surface thereof on the object, the connection between internal part and external part is released. By this means, the placing of the internal part onto the stud is decoupled from the pressing force of the external part against the object, and therefore excessive torques, which may result in increased forces axially in the pull-off direction of the stud, can no longer occur. This increases the process reliability.

The external-part internal-engagement section and the internal-part external-engagement section are preferably designed in such a manner that they can be fixed in different axial relative positions to each other. By this means, it is possible to compensate for different axial thicknesses of objects and/or different axial heights of upper sides of flange sections of studs, and therefore the plastic nut can be used universally for different fastening sites.

The object is therefore completely achieved.

According to a particularly preferred embodiment, the internal part and the external part are designed as an integral injection-moulded part.

In this embodiment, the plastic nut can be produced in a simple manner, for example by a simple injection-moulding process. The material of the internal part and of the external part is preferably identical and is preferably a relatively hard plastics material, such as, for example, PA, which may also be fibre-reinforced.

In general, it is possible for the internal-part internal-engagement section to be designed as a serrated section. In this case, the internal part is placed onto the stud, for example, by a pure axial movement, for example by striking thereon (by means of a hammer or the like). The internal serrated profile engages in this case with the external thread of the stud and produces axial securing.

However, it is particularly preferred if the internal-part internal-engagement section is designed as an internal-part internal thread, wherein the relative movement, during which the connection of internal part and external part is released, is a relative rotation.

In this embodiment, the internal part is screwed onto the stud until the external part rests on the upper side of the object. At this location, the external part is preferably secured in the circumferential direction, and therefore further rotation of the internal part onto the stud results in the connection being released.

According to a further preferred embodiment, the internal-part external-engagement section is designed as an internal-part external thread, wherein the external-part internal-engagement section is designed as an external-part internal thread.

In general, it is indeed conceivable for said engagement sections between internal part and external part likewise to be realized via a type of serrated contour such that, after the external part strikes against the object, the axial movement of the internal part onto the stud results in an axial relative offset between external part and internal part.

However, the preferred variant, in which said engagement sections are designed as threads, has the effect that, when the internal part is rotated and after the external part is placed onto the object, a further rotation of the internal part, in order to screw the latter further onto the stud, does not result in a further axial movement of the external part.

It is therefore preferred if the threads between stud and internal part, on the one hand, and between internal part and external part, on the other hand, are oriented at least in the same direction, but in particular also have an approximately identical pitch.

In the case of the method according to the invention, the internal part, preferably after the release of the connection, is screwed further onto the stud until the internal part touches the upper side of the flange section.

Consequently, a further rotation of the internal part would at most result in the threaded engagement between internal part and stud being released or destroyed. Owing to the stop on the upper side of the flange section, further screwing of the internal part onto the thread cannot at any rate result in the stud thereby being able to be torn out of the workpiece. The process reliability can thereby be increased.

If the internal part rests on the upper side of the flange section, the external part is held in the axial direction on the upper side of the object via the threaded engagement with the internal part. The retaining forces which can thereby be achieved are basically comparatively low, but may be increased in different ways, as will also be described below.

According to a further preferred embodiment, a device for securing against rotation is formed on the support surface of the external part.

The effect achieved by this is that, after the fastening arrangement is produced, the external part is not released by rotation in relation to the internal part. However, another effect also achieved by this is that the external part, once placed on, is held on the surface of the object via the device for securing against rotation, and therefore further rotation of the internal part results in the connection between internal part and external part being released.

According to a further preferred embodiment, the support surface of the external part is assigned an axial clamping device.

The axial clamping device can ensure in particular that the external part is supported on the object via the axial clamping device, in order to bring about bracing of the engagement sections between internal part and external part. The clamping forces can thereby be increased.

According to a further preferred embodiment, the device for securing against rotation and/or the axial clamping device has a section made from a relatively soft plastics material.

The section can be provided annularly on the support surface, for example in the form of a friction section. The friction section can be produced in a two-component injection-moulding process during the production of the plastic nut, and therefore the plastic nut can be produced at comparatively low costs. Furthermore, the logistics can be simplified, since the friction section does not have to be provided as a separate component.

The (friction) section can firstly exert a certain axial clamping force. Secondly, the friction section can ensure that a means for securing against rotation is set up between the support surface (i.e. the friction section) and the surface of the object.

According to a further preferred embodiment, the device for securing against rotation has at least one projection for setting up a substantially interlocking connection to an object to be fastened.

A projection of this type can bore, for example, into the surface of the object. This results in a means for securing against rotation which may possibly be more reliable than a pure frictional means of securing against rotation.

Furthermore, it is advantageous overall if the internal-part external-engagement section and/or the external-part internal-engagement section are/is designed in such a manner that the engagement between internal part and external part is all the more stronger, the further the internal part and the external part have moved relative to each other from the connecting position.

The basic concept of this embodiment has the starting point that, in many applications, the first part of the relative movement between external part and internal part is intended to take place substantially without obstruction.

However, the further the internal part is moved relative to the external part, the stronger the engagement (in particular frictional engagement) will be, and therefore higher clamping forces for securely clamping an object on the workpiece or on the stud can be achieved.

In all of the abovementioned embodiments, it goes without saying that the internal part and the external part can in each case be designed as ring parts. The internal part preferably has a central internal bore on which the internal-engagement section of the internal part is formed, but the internal part could also be designed in the manner of a cap nut.

The external part is designed in each case as a ring part. The diameter of the opening in the object is preferably larger than the external diameter of the internal part. The internal diameter of the friction section is preferably larger than or equal to the diameter of the opening in the object.

In some cases, a firm fit between external part and internal part can be adjusted via friction in the thread, and/or via static friction of the friction section (selection of the material of the friction section, for example TPE).

In the fastening position, there is generally an interlocking connection between internal part and external part in the thread (or, in the case of the serrated principle, between teeth of the internal part and of the external part). This achieves a relatively high pull-off force in the event of the object being subjected to a tensile load, i.e. if the object is pulled off in the axial direction from the workpiece.

The plastic nut can be used for different types of stud and flange heights thereof. The plastic nut is useable, for example, for steel ring studs and large-flange aluminium studs. The objects or components can be thin-walled or thick-walled. The objects may be heat shields, wheel house claddings, underbody panels, etc.

It goes without saying that the features mentioned above and those which have yet to be explained below can be used not only in the respectively stated combination, but also in different combinations or on their own without departing from the scope of the present invention.

Exemplary embodiments of the invention are illustrated in the drawing and are explained in more detail in the description below. In the drawing:
- Fig. 1: shows a perspective illustration of a first embodiment of a plastic nut according to the invention;
- Fig. 2: shows a longitudinal sectional view through the plastic nut of Fig. 1;
- Fig. 3: shows a fastening system, by means of which an object is fastened to a workpiece, specifically with the use of the plastic nut of Figs. 1 and 2;
- Fig. 4: shows a view comparable to Fig. 3, in which an object of larger axial thickness is fastened;
- Fig. 5: shows an alternative embodiment of a threaded engagement between internal part and external part of the plastic nut; and
- Fig. 6: shows a schematic illustration of a further alternative embodiment of a plastic nut according to the invention.

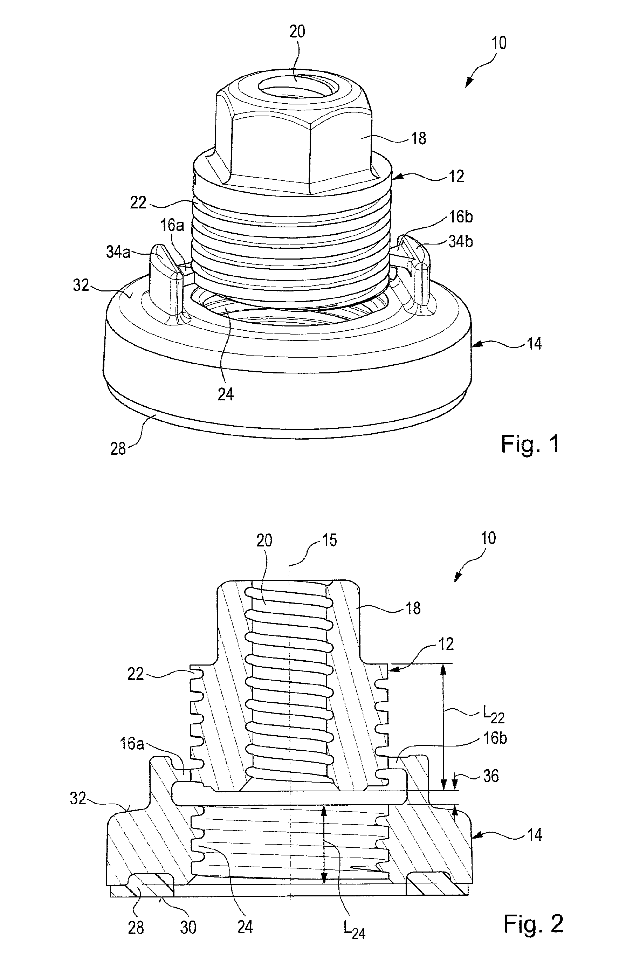

A first embodiment of a plastic nut according to the invention is schematically illustrated in Figs. 1 and 2 and denoted in general by 10.

The plastic nut 10 has an internal part 12 and an external part 14. The internal part 12 and the external part 14 are oriented in general along a longitudinal axis 15. The internal part 12 is designed as a ring part or a hollow cylinder part. The external part 14 is likewise designed as a ring part, in each case concentrically with respect to the longitudinal axis 15.

The internal part 12 and the external part 14 are produced from a plastics material, in particular a relatively hard plastics material. The internal part 12 and the external part 14 are connected rigidly to each other via a connection. In the present case, the connection is formed by two webs 16a, 16b which are diametrically opposite each other with respect to the longitudinal axis 15 and are designed as connecting webs separable by destruction.

At an axially upper end on the outer circumference, the internal part 12 has a tool attachment section 18 which, for example, is of polygonal design in cross section. Furthermore, the internal part 12 has an internal-part internal thread 22 which is of axially continuous design. The internal part 12 furthermore contains an internal-part external thread 22 which axially adjoins the tool attachment section 18, specifically toward the external part 14.

The external part 14 has an external-part internal thread 24 which extends over the entire axial length of the external part 14. The external-part internal thread 24 is matched to the internal-part external thread 22. The internal-part internal thread 20 is matched to an external thread of a stud, onto which the internal part 12 can be screwed, as will also be explained below.

The external part 14 has, at the axial end thereof which faces away from the internal part 12, a friction section in the form of a ring 28 made from TPE. However, the ring 28 may also be produced from other plastics materials which provide a high coefficient of friction and are preferably elastically compressible. The material of the ring 28 is always softer than the material of the internal part 12 and of the external part 14. The ring 28 is designed as a support surface 30 of the plastic nut 10, specifically for bearing against an object, as will also be described below.

The external part 14 has a surface 32 which is axially opposite the support surface 30 and from which two lugs 34a, 34b protrude axially in the axial direction, specifically diametrically opposite each other with respect to the longitudinal axis 15. The lugs 34a, 34b lie on a larger outside diameter than the external circumference of the internal part 12. On the radial inner side, the lugs 34a, 34b are respectively connected via the abovementioned connecting webs 16a, 16b to corresponding external-circumference sections of the internal part 12, specifically preferably at an axial end of the internal part 12, which end is opposite the external part 14.

The internal part 12, the external part 14 and the connecting webs 16a, 16b are produced from a uniform material, to be precise by injection moulding, and therefore the plastic nut 10 can be provided as an integral part. The ring 28 can have been applied to the lower side of the plastic nut 10 retrospectively. However, it is preferred if the ring 28 has been injection-moulded together with the internal part 12 and the external part 14 in what is referred to as a two-component injection-moulding process (2C process). The ring 28 is of a plastics material which, as considered relatively, is softer than the plastics material of the internal part 12 and of the external part 14.

In the case of the plastic nut 10 produced in this manner, the internal part 12 and the external part 14 are spaced apart from each other in the axial direction by an axial distance 36 which is greater than or equal to 0 mm, and is preferably smaller than 20 mm. For reasons of compactness, it is preferred if the axial distance 36 is relatively small.

An axial length L22 of the internal-part external thread 22 is smaller than the axial overall length of the internal part 12. However, the length of the internal-part external thread 22 is preferably greater than the axial length L24 of the external-part internal thread.

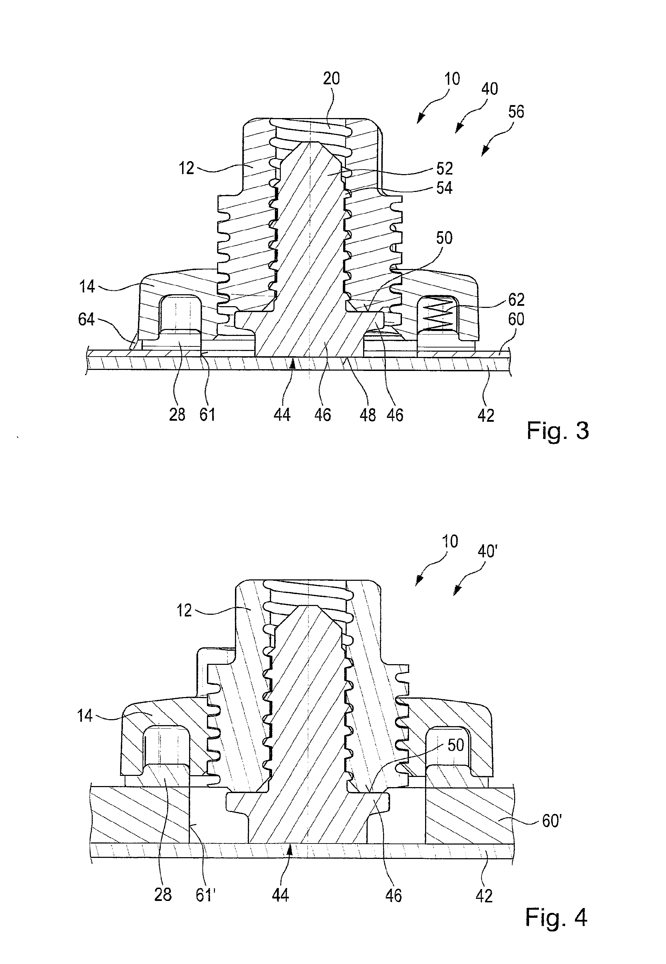

Figs. 3 and 4 show how the plastic nut 10 can be used in order to produce a fastening arrangement 40. The fastening arrangement 40 includes a workpiece 42, for example in the form of a metal sheet or of another section of a vehicle body of a motor vehicle. A stud 44 is joined onto a visible side of the workpiece 42. The joining can be undertaken, in particular, by stud welding or by adhesive bonding. The stud 44 has a flange section 46 with an outside diameter which is smaller than the inside diameter of the external-part internal thread 24 and larger than the outside diameter of the internal-part internal thread 20. The flange section 46 has a joining side 48 which faces the workpiece 42 and via which the stud 44 is connected to the workpiece 42. The flange section 46 furthermore has an upper side 50 which is of annular design in the present case, since a stem section 52 of the stud 44 extends from the upper side 50. The stem section 52 has a smaller diameter than the flange section 46 and the external circumference has a stud thread 54 which is matched to the internal-part internal thread 20.

The stud 44 and the plastic nut 10 form a fastening system 56.

The fastening system 56 serves for producing the fastening arrangement 40, by means of which an object 60, for example in the form of a trim panel or the like, is fixed to the workpiece 42. The object 60 can be designed as a planar object, but always has an opening 61, the diameter of which is larger than the external circumference of the internal-part external thread 22 and which is preferably smaller than or equal to the internal circumference of the ring 28.

The axial thickness of the object 60 can be smaller than the axial height of the upper side 50 of the flange section 46, but can also be larger than said axial height. The axial thickness of the object 60 is at any rate significantly smaller than the axial overall length of the stud 44. The diameter of the opening 61 is preferably smaller than or equal to the inside diameter of the ring 28 and is preferably smaller than the diameter of the external-part internal thread 24.

The method for fastening the object 60 with respect to the stud 44 and the workpiece 42 takes place as follows. First of all, the stud 44 is joined onto the workpiece 42, as illustrated in Fig. 3. The object 60 is then placed onto the workpiece 42 in such a manner that the stud 44 protrudes axially through the opening 61. The plastic nut 10, as illustrated in Figs. 1 and 2, is then provided. The plastic nut is placed onto the stud 44 such that a tip of the stud 44 is guided through the external-part internal thread 24 without contact and enters into engagement with the internal-part internal thread 20. Starting therefrom, a screwing operation begins, preferably by fitting a tool (manually or by means of an automatic screwing machine) onto the workpiece attachment section 18. The screwing-on operation takes place in a first phase until the support surface 30 strikes against the upper side of the object 60. If the connection 16 between internal part 12 and external part 14 were not releasable, the fastening operation would be ended at this juncture. However, in the present case, the ring 28 enters into frictional engagement with the upper side of the object 60 and is secured in the direction of rotation. In this case, a continuation of the screwing movement of the internal part 12 results in the connection breaking, i.e. in the connecting web 16a, 16b breaking. The internal part 12 can subsequently be screwed further onto the stud 44, specifically until the internal part 12 strikes against the upper side 50 of the flange section 46, as illustrated in Fig. 3. During this second phase of the screwing operation, the external part 14 has been held in the direction of rotation with respect to the object 60 by means of the ring 28 composed of the elastic material or material having a high coefficient of friction. Accordingly, a relative rotation and a relative threaded engagement between the internal part 12 and the external part 14 or between the internal-part external thread 22 and the external-part internal thread 24 has taken place, as illustrated in Fig. 3.

The ring 28 can preferably be elastically deformed, and therefore the threaded engagement between the internal-part external thread 22 and the external-part internal thread 24 is braced axially, thus preventing the external part 14 from inadvertently rotating loosely in relation to the internal part 12 counter to the screwing-in direction.

All in all, a high holding force or clamping force is achieved, specifically, firstly, owing to the threaded engagements of internal-part internal thread 20 and stud thread 54 and of internal-part external thread 22 and external-part internal thread 24. In addition, the effect achieved via the frictional engagement between the ring 28 and the upper side of the object 16 is that a means or device for securing against rotation is set up and, consequently, inadvertent loosening of the fastening arrangement 40 can be avoided. The axial bracing, which is set up in this case, of the threaded engagement between internal-part external thread 22 and external-part internal thread 24 can optionally be reinforced by an axial clamping device 62, as indicated schematically in Fig. 3 in the form of a compression spring.

Instead of a frictional engagement between the ring 28 and the upper side of the object 60, an interlocking engagement can also be set up, for example by means of a projection 64, which protrudes in the axial direction from the lower side of the external part 14 and, at the end of the first phase of the fastening method, engages in the surface of the object 60 and produces an interlocking connection in the circumferential direction therewith, for example by a type of grooving step.

Of course, it is possible to provide the projection 64 instead of the ring 28 or in addition to the ring 28, in order to set up a means for securing against rotation.

Fig. 4 shows a further embodiment of a fastening arrangement 40' using the same plastic nut 10 and the same stud 44 as in the embodiment of Fig. 3, but with the object 60' being significantly thicker in the axial direction.

On account of the thicker object 60', the first phase of the above-described fastening method is shorter, since the external part 14 is placed earlier onto the upper side of the object 60'. Nevertheless, the internal part 12 is again screwed onto the upper side 50 of the flange section 46 of the stud 44. Owing to the greater axial thickness of the object 60', the internal part 12 extends completely through the external part 14 in this final state, and therefore the external-part internal thread 24 is completely in engagement with the internal-part external thread 22. By contrast, in the embodiment of Fig. 3, the internal part 12 is only partially screwed into the external part 14.

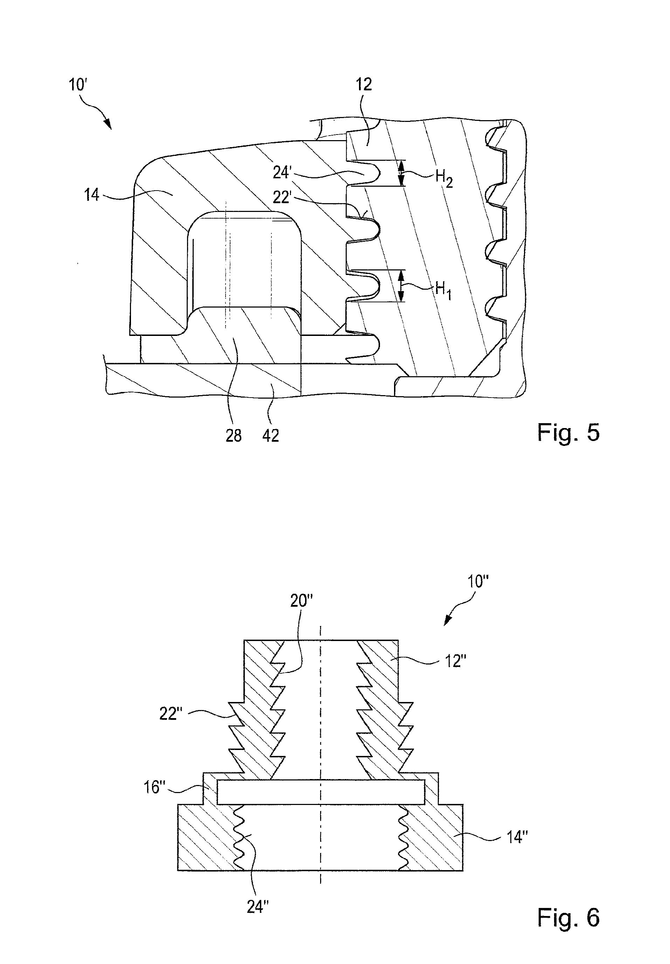

Fig. 5 shows an enlarged illustration of the threaded engagement between an internal-part external thread 22' and an external-part internal thread 24' of a further embodiment of a plastic nut 10'. The plastic nut 10' generally corresponds in respect of construction and function to the plastic nut 10 of Figs. 1 and 2. Identical elements are therefore identified by the same reference numbers. Essentially the differences are explained below.

In this embodiment, the internal-part external thread 22' has thread turns which are axially larger on the side facing the stud 44 than on the side facing the tool attachment section 18, as is schematically illustrated in Fig. 5 by different heights H1 and H2. During a screwing-in operation, this results in the screwing-in operation at the beginning of the second phase of the fastening method, in which the relative rotation between internal part 12 and external part 14 takes place, first of all taking place in a manner substantially free from resistance, since the height H1 of the internal-part external thread 22' is dimensioned in such a manner that an engagement with the corresponding thread turns of the external-part internal thread 24' may be affected by play. However, the further the internal part 12' is screwed into the external part 14, the smaller the thread turn height becomes, as shown in Fig. 5 at H2, and therefore a greater engagement between internal part 12' and external part 14 is produced. This has the advantage that a type of means or device for securing against rotation is also set up by the greater engagement between the internal-part external thread 22' and the external-part internal thread 24' when the end position of the fastening arrangement 40 or 40' is reached. This may be useful in particular if axially thicker objects 60' are to be fixed to a workpiece 42.

Fig. 6 shows a further embodiment of a plastic nut 10" which generally corresponds in respect of construction and function to the plastic nut 10 of Figs. 1 and 2. Identical elements are therefore identified by the same reference numbers. Essentially the differences are explained below.

In the case of the plastic nut 10", an engagement section 20" in the form of a serrated contour is provided instead of an internal thread on the internal circumference of the internal part 12". An internal-part external-engagement section 22", which is designed in the manner of a serrated profile, is also provided instead of the internal-part external thread 22 on the external circumference of the internal part 12". An external-part internal thread may be formed on the internal circumference of the external part 14", but some other ribbing or an engagement section 24", which can interact with the internal-part external-engagement section 22", may also be formed.

In the case of the plastic nut 10", the relative movement between internal part 12" and external part 14", during which the connection 16" is severed, does not take place by means of a relative rotation, as in the case of the plastic nut 10 of Figs. 1 and 2, but rather by means of a relative axial movement. In this embodiment, the plastic nut 10" can be fixed to a stud 44 by the plastic nut 10" being struck onto the stud. In this case, a fastening arrangement which corresponds to that of Figs. 3 and 4 can be formed.

## Claims

1. Plastic nut (10), in particular for fastening an object (60) with respect to a stud (44) protruding from a workpiece (42), comprising
- an internal part (12) which has an internal-part internal-engagement section (20), which is matched to a stud thread (54) of a stud (44), and which has an internal-part external-engagement section (22), and
- an external part (14) which has a radially oriented support surface (30) for bearing against an object (60) to be fastened, and which has an external-part internal-engagement section (24) which is matched to the internal-part external-engagement section (22),
**characterized in that** the internal part (12) and the external part (14) are connected to each other via a connection (16) which is released in the event of a relative movement of internal part (12) and external part (14).

2. Plastic nut according to Claim 1, **characterized in that** the internal part (12) and the external part (14) are designed as an integral injection-moulded part.

3. Plastic nut according to Claim 1 or 2, **characterized in that** the internal-part internal-engagement section (20) is designed as an internal-part internal thread, wherein the relative movement, during which the connection (16) of internal part (12) and external part (14) is released, is a relative rotation.

4. Plastic nut according to one of Claims 1-3, **characterized in that** the internal-part external-engagement section (22) is designed as an internal-part external thread, wherein the external-part internal-engagement section (24) is designed as an external-part internal thread.

5. Plastic nut according to one of Claims 1-4, **characterized in that** the support surface (30) of the external part (14) is assigned a device for securing against rotation (28).

6. Plastic nut according to one of Claims 1-5, **characterized in that** the support surface (30) of the external part (14) is assigned an axial clamping device (62).

7. Plastic nut according to Claim 5 or 6, **characterized in that** the device for securing against rotation (28) and/or the axial clamping device (62) has a section made from a relatively soft plastic material.

8. Plastic nut according to one of Claims 5-7, **characterized in that** the device for securing against rotation has at least one projection (64) for setting up a substantially interlocking connection to an object (60) to be fastened.

9. Plastic nut according to one of Claims 1-8, **characterized in that** the internal-part external-engagement section (22') and/or the external-part internal-engagement section (24') are/is designed in such a manner that the engagement between internal part (12) and external part (14) is all the more stronger, the further the internal part (12) and the external part (14) have moved relative to each other from the connecting position.

10. Fastening system comprising a stud (44) which has a flange section (46) and a stem section (52), which stem section extends from the flange section (46) and has a stud thread (54), wherein a side of the flange section (46) that faces away from the stem section (52) is designed as a joining side (48) for joining the stud (44) onto a workpiece (42), and wherein the flange section (46) has an upper side (50) facing the stem section (52), and comprising a plastic nut (10) according to one of Claims 1-9.

11. Method for fastening an object (60), which has an opening (61), with respect to a stud (44), which is joined to a workpiece (42), of a fastening system (56) according to Claim 10, with the following steps:
- arranging the object (60) on the workpiece (42) in such a manner that the stud (44) protrudes through the opening (61);
- placing the plastic nut (10) onto the stud (44) and screwing the internal part (12) onto the stud (44) until the support surface (30) of the external part (14) touches an outer side of the object (60);
- continuing the screwing of the plastic nut (10) onto the stud (44), wherein the external part (14) is held in a rotationally fixed manner with respect to the object (60) by means of friction and/or an interlocking connection, and therefore the connection (16) between internal part (12) and external part (14) is released.

12. Method according to Claim 11, wherein, after release of the connection (16), the internal part (12) is screwed further onto the stud (44) until the internal part (12) touches the upper side (50) of the flange section (46).
